# EUROPEAN PATENT APPLICATION

(11) **EP 4 815 415 A1**
(43) Date of publication of application: **30.09.2026**
(21) Application number: 25166013.0
(22) Date of filing: 25.03.2025
(51) Int. Cl.: H04M 1/663, H04L 51/212, H04M 1/7243

(54) **METHOD, DEVICE AND SYSTEM FOR ASSISTING A USER OF A TELECOMMUNICATIONS DEVICE IN DETECTING POTENTIALLY HARMFUL CONTENT**

(71) Applicant: Deutsche Telekom AG, 53113 Bonn (DE)
(72) Inventor: ROOS, Andreas, 64354 Reinheim (DE); DRÜSEDOW, Steffen, 16727 Oberkrämer (DE)
(74) Representative: Blumbach · Zinngrebe Patentanwälte PartG mbB

(57) **Abstract**

A method for assisting a user of a telecommunications device (200) in detecting potentially harmful content is provided, which comprises the steps of
a) providing a communication message that is received by a communication application (201) executed on the telecommunications device (200) to an assistant device (100),
b) checking the communication message by the assistant device (100) for potentially harmful content based on stored parameters and/or usage patterns, and
c) notifying the user of the telecommunications device (200), if potentially harmful content is identified by the assistant device (100).

Further, an assistant device (100) and a system (50) is proposed, which are adapted to perform the method.

## Description

The invention generally relates to the communication between telecommunications devices, and in particular to a method, device and system for assisting a user of a telecommunications device in detecting potentially harmful content.

### Background

In today's digital world humans, especially children and teenagers, are exposed to many threats that are often related to unwanted communication attempts or critical content that is for example received via Short Message Service (SMS) or via other messenger applications. Children are often left alone with such challenges, because their parents often have no idea in which situations their children are in.

There are solutions available which try to protect children from these threats. Parental control solutions, for example, allow parents to restrict the access of their children to specific content, typically by employing content filters, which for example limit access to age-inappropriate content. In addition, with parental control solutions usage time-limits may be defined by the parents or certain types of usage may be completely forbidden. A method for cell phone parental control is for example known from WO 2005/031544 A2. Today, typically the operating systems of smartphones already have bult-in tools for parental control.

Furthermore, some communication applications used on smartphones allow to restrict the use to a certain kind of communication, wherein the application may for example be configured to only allow messages from contacts, which are included in the phone's address book.

### Summary of the Invention

It is an object of the present invention to show a way to deal with content that is received by a telecommunications device and that is inadequate for or harmful for the user of the telecommunications device, in particular when such content is received as content of a communication message.

A core aspect of the present invention can be seen in that incoming messages and/or other incoming content of a telecommunications device are investigated and evaluated regarding potential threats, and in that feedback on detected potentially harmful content is provided to the user of the telecommunications device, wherein, in particular, the user of the telecommunications device is a minor, i.e. a child or a teenager, and wherein the feedback may in addition also be provided to the parents of the user of the telecommunications device.

Providing feedback directly to the minor who is the user of the telecommunications device has an advantageous educational effect on the minor and improves his or her awareness and self-confidence.

Another core aspect of the present invention is to monitor the incoming communication of the telecommunications device without being invasive with respect to the involved communication solutions or communication applications.

According to a first aspect of the invention a method for assisting a user of a telecommunications device in detecting potentially harmful content is proposed, comprising the steps of
a) providing a communication message that is received by a communication application executed on the telecommunications device to an assistant device,
b) checking the communication message by the assistant device for potentially harmful content based on stored parameters and/or usage patterns,
c) notifying the user of the telecommunications device, if potentially harmful content is identified by the assistant device.

The telecommunications device may be any device capable of receiving potentially harmful content, in particular text and/or graphical content. In particular, the telecommunications device may be a mobile telecommunications device such as a mobile phone or smartphone or tablet or laptop or PC. In particular, the telecommunications device may for example be adapted to receive various kinds of messages, such as messages based on SMS (Short Message Service) or MMS (Multimedia Messaging Service), instant messages via instant messaging (IM) applications or e-mail messages.

Instant messaging (IM) technology is a type of synchronous communication involving the immediate transmission of messages between two or more parties via a communication network, in particular via the Internet. IM applications and services, often also referred to as "social messengers", "messaging apps", "chat apps" or "chat clients" may also feature the exchange of multimedia content, file transfer, VoIP, and video chat capabilities. Instant messaging systems may facilitate connections in chat rooms or between known users, which are specified in a contact list also referred to as a "buddy list" or "friend list". IM services are often centralized networks run by the servers of the service operator, wherein a browser-based client may be used or, more often, the client is provided in the form of an application that is installed on the telecommunications device by the user. IM services may for example utilize the Extensible Messaging and Presence Protocol (XMPP).

Potentially harmful content may be textual message content such as for example "Click on following link to get ....", "Send me a picture from you while ...." or "Are your parents at home?", but also content in form of a picture or a content link to a suspicious URL (Uniform Resource Locator).

Generally, the telecommunications device may be any kind of user equipment, wherein the term user equipment generally refers to any kind of end-user device that enables a user to access and utilize communication services of a communication network infrastructure. In particular, the term user equipment (UE), as it is typically used in the context of mobile telecommunications, particularly in the specifications defined by the 3rd Generation Partnership Project (3GPP), may refer to an end-user device, also referred to as mobile terminal or mobile device, i.e. a component in cellular networks for connecting users to the cellular network infrastructure. Accordingly, the telecommunications device preferably is adapted to communicate with a cellular network infrastructure to access services and establish connections, wherein the capabilities and features of the telecommunications device may vary depending on the supported network generation (2G, 3G, 4G, 5G or 6G).

Typically, the telecommunications device is a multifunctional device designed to provide voice, data, and multimedia communication services to end-users. Accordingly, the telecommunications device may for example be designed for establishing voice calls, accessing the Internet, sending and receiving e-mails, video conferencing and/or online gaming. The telecommunications device may also be a tablet computer or a wearable device or any other portable telecommunications device.

The communication message that is received by the communication application being executed on the telecommunications device may be a message that is sent by a member of a communication group, wherein the user of the telecommunications device and the assistant device are members of the communication group. For this purpose, preferably an identifier is assigned to the assistant device for identifying the assistant device within the communication group. The type of identifier may vary depending on the type of communication application. For example, the identifier of the assistant device may be a phone number, which the user of the telecommunications device may store in the phone book of his or her telecommunications device.

The identifier may be used by the user of the telecommunications device to add the assistant device to the communication group, e.g. by adding the respective contact in the phone book to a chat group or to a friend list that is associated with an IM application. Depending on the communication application that is used, any other suitable kind of identifier may be utilized, such as for example an e-mail address or a username.

When the assistant device is a member of the communication group, each communication message that the telecommunications device receives as a member of the communication group is automatically also received by the assistant device and is checked by the assistant device for potentially harmful content based on stored parameters and/or usage patterns.

Alternatively, the assistant device may also receive information on a communication message that is received by the telecommunications device from the telecommunications device. For this purpose, a screen reader application may be executed on the telecommunications device, wherein screen content is captured by the screen reader application and is transmitted to the assistant device. The screen reader application may preferably be adapted to detect that a received communication message is displayed to the user of the telecommunications device and to capture the screen content in response to detecting a received communication message being displayed. Preferably, the screen reader application is adapted to query the operating system of the telecommunications device or the respective communication application for what is currently being displayed and receive updates when the display changes.

Further, it is conceivable that the provider of a communication application such as an IM application provides an application programming interface (API) to access communication messages directed to the telecommunications device. If that is the case, the assistant device preferably uses such an API to access a communication message that is received by the respective communication application executed on the telecommunications device. For practical purposes, the user of the telecommunications device needs to authorize the assistant device to access received communication messages in the respective communication application, in order to enable the assistant device to access communication messages received by the telecommunications device via the respective communication application using an API of the application provider.

In a preferred embodiment, a user of a further telecommunications device is notified by the assistant device, if potentially harmful content is identified, wherein in particular the user of the telecommunications device is a child and the user of the further telecommunications device is a parent of the child.

For notifying the user of the telecommunications device that potentially harmful content is identified by the assistant device, preferably a notification message is transmitted from the assistant device to the telecommunications device, in particular to a notification application executed on the telecommunications device. The same or a different notification message may also be transmitted from the assistant device to the further telecommunications device, which typically is a telecommunications device of a parent of the user of the monitored telecommunications device.

The notification application may preferably be provided as a so-called dashboard application, or dashboard for short, which typically has the form of a graphical user interface, and which presents to the user of the telecommunication device a validation result, i.e. the result of the communication message being checked by the assistant device with information on the identified potentially harmful content. The validation result presented to the user may comprise visualizations and additional information, for example information on why the communication message has been identified as harmful. As a visualization, for example a degree of harmfulness may be presented using different colors. The dashboard application may comprise a dashboard frontend executed in the telecommunications device and a dashboard backend executed in the assistant device.

According to a second aspect of the invention an assistant device for assisting a user of a telecommunications device in detecting potentially harmful content is proposed that comprises a data storage entity, an input/output entity adapted to access a communication message that is received by a communication application executed on the telecommunications device, a validation entity, adapted to check the communication message for potentially harmful content based on parameters and/or usage patterns stored in the data storage entity, and a notification entity, adapted to notify the user of the mobile telecommunications device, if potentially harmful content is identified by the validation entity.

The assistant device preferably is adapted to be used for performing the above-described method and for this purpose may with advantage be configured to perform any aspect described above with respect to the method.

Accordingly, an identifier is preferably assigned to the assistant device, so that the assistant device and the telecommunication device may be members of a common communication group, wherein the assistant device preferably is adapted to access all communication messages exchanged in the communication group.

Further, the assistant device preferably is adapted to receive information on received communication messages from the telecommunications device, wherein in particular the assistant device comprises an interface for communicating with a screen reader application which is executed on the telecommunications device, and wherein the interface is adapted to receive screen content captured by the screen reader application.

In a further implementation of the second aspect of the invention, the assistant device comprises an application programming interface to access communication messages, wherein in particular the application programming interface is provided by the provider of the communication application executed on the telecommunications device.

The notification entity preferably is adapted to also notify a user of a further telecommunications device, if potentially harmful content is identified by the validation entity, wherein in particular the user of the telecommunications device is a child and the user of the further telecommunications device is a parent. Further, the assistant device may preferably be adapted to transmit a notification message to the telecommunications device and/or to the further telecommunications device for notifying the respective user, in particular to a notification application executed on the respective telecommunications device.

In a further implementation of the second aspect of the invention, the assistant device comprises a learning entity, adapted to adjust the stored parameters and/or usage patterns based on historical communication data and/or based on a machine-learning algorithm and/or based on input provided by the user of the further telecommunications device.

According to a third aspect of the invention a system is proposed, which comprises an assistant device as described above, at least one telecommunications device and a telecommunications network. The assistant device preferably may be provided as a hardware and/or software server adapted to communicate with the at least one telecommunications device via the telecommunication network, wherein the server may in particular be provided as a backend server by a telecommunications provider.

The invention further proposes a computer-readable storage medium with program code stored thereon, the program code comprising instructions for carrying out a method, wherein the method comprises the above-described steps that are performed by the assistant device.

It is to be noted that the system and devices described above preferably are adapted for performing the above-described method, wherein accordingly the system and devices described above may for this purpose with advantage be respectively configured to perform any aspect described above with respect to the method.

### Brief description of the drawings

The invention is described in detail below by way of preferred embodiments in connection with the accompanying drawings, wherein
- Figure 1: schematically shows an exemplary embodiment of a system adapted to perform a method according to the invention,
- Figure 2: schematically shows a functional architecture of components adapted to perform a method according to the invention,
- Figure 3: schematically shows an exemplary flowchart of communication between devices involved in a preferred embodiment of the method.

### Detailed Description of exemplary embodiments

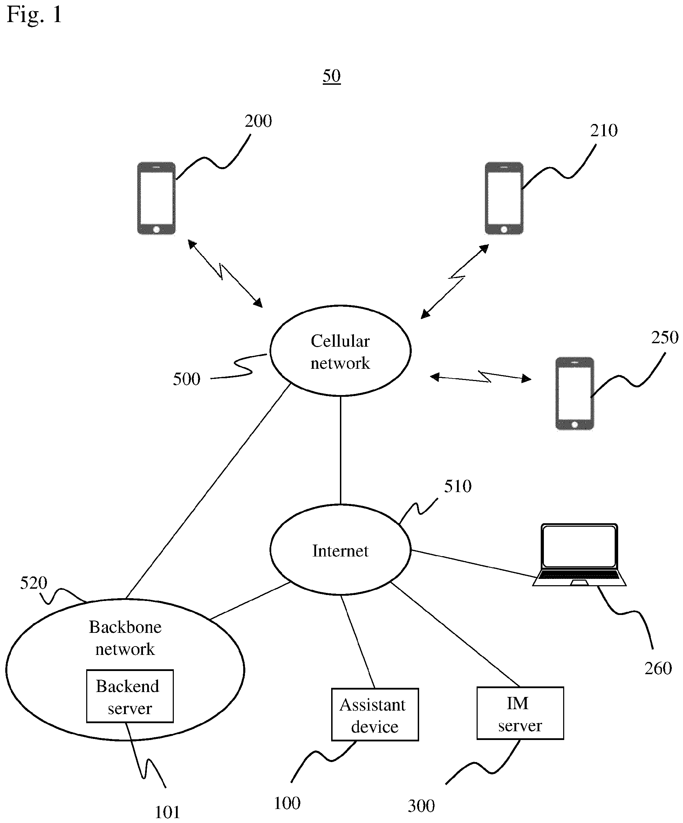

Referring to Fig. 1, an exemplary system 50 is shown, which is adapted to perform an inventive method. In the shown embodiment, a telecommunications device 200 is used by a child, wherein in the following, the term child shall refer to any underage person, i.e. typically a person under the age of 18, and hence shall also refer to teenagers.

Today, a child using a smartphone 200 for communication purposes is confronted with various threats, whereon these threats are often related to unwanted communication attempts or critical content received via one of various communication channels, including for example instant messaging applications or SMS. In Fig. 1, an exemplary smartphone 210 is shown that may be used by a communication peer of the child, who potentially performs an unwanted communication attempt directed to the child who uses the smartphone 200.

However, the parents of the child typically are unaware of unwanted communication attempts that are directed to their child's telecommunications device 200. The solutions known from the prior art do not sufficiently address the aspect of making a child and his or her parents aware, when threatening and/or harming situations occur. Therefore, the child may suffer from unwanted communication such as for example cyberbullying, with the parents being totally unaware of the harming communication and thus also of the situation their child is in. The child may also not be able to correctly categorise the communication as potentially harmful or may be reluctant to speak to its parents.

In Fig. 1, exemplary communication devices 250 and 260 of the parents of the child are shown, which in the shown embodiment are provided as a smartphone 250 and a computer 260, e.g. a laptop.

In the exemplary embodiment shown, the smartphones 200, 210 and 250 can be connected to a cellular network 500 via a mobile radio connection, wherein the cellular network 500 is connected to a backbone network 520 and to the Internet 510, wherein the backbone network 520 is also connected to the Internet 510. Accordingly, the smartphones 200, 210 and 250 are also adapted to access the Internet via a mobile radio connection, wherein the mobile radio connection can be based, for example, on one of the mobile radio standards GSM, GPRS, UMTS, LTE or 5G. In the shown example, an instant messaging service is provided, wherein for this purpose an instant messaging (IM) server 300 is connected to the Internet, executing an IM server application. In the example shown, the users of the smartphones 200 and 210, i.e. the child and a potential communication peer, are registered for the instant messaging service and a corresponding instant messaging client application is respectively installed and executed on each of the smartphones 200 and 210.

A core aspect of the invention is to investigate and evaluate messages and/or other content that is received by a telecommunications device to identify potentially harmful content. For this purpose, in the shown example an assistant device 100 is provided, which is adapted to investigate and evaluate messages and/or other content that is received by the telecommunications device 200 and to provide feedback on detected potentially harmful content to the user of the telecommunications device 200, i.e. to the child. Preferably, the feedback is also provided to the parents, wherein in the shown example the feedback may be accessible by the smartphone 250 and/or by the laptop 260.

As shown in Fig. 1, the assistant device 100 may be provided as a stand-alone server that is connected to the Internet. Alternatively, it may also be provided as a backend server 101 arranged within the backbone network 520, in which case the assistant device may be operated by the telecommunications provider operating the backbone network 520.

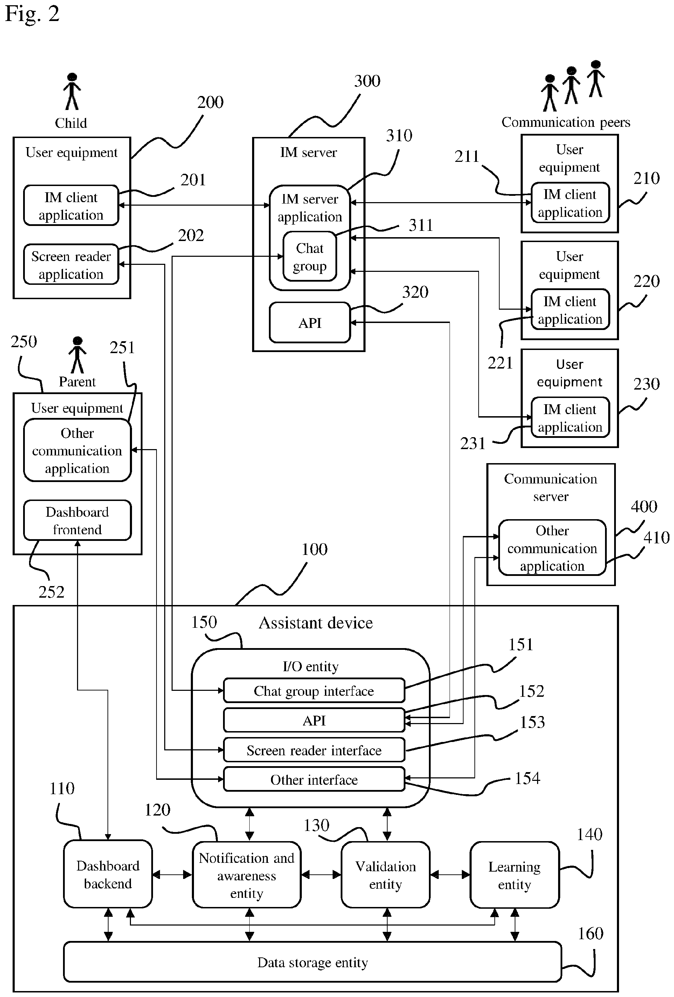

The functional architecture of components, which are adapted to perform a method according to the invention, is schematically illustrated in more detail in Fig. 2.

Referring to Fig. 2, the functional components of assistant device 100 are shown in more detail. The assistant device 100 is adapted to assist a user of a telecommunications device in detecting potentially harmful content, e.g. the user of the telecommunications device 200. For this purpose, the assistant device 100 comprises a data storage entity 160, an input/output entity 150 adapted to access a communication message that is received by a communication application executed on the telecommunications device, a validation entity 130, adapted to check the communication message for potentially harmful content based on parameters and/or usage patterns stored in the data storage entity 160, and a notification entity 120, adapted to notify the user of the mobile telecommunications device, if potentially harmful content is identified by the validation entity 130. The assistant device 100 preferably monitors any content received by the telecommunications device 200, in particular incoming messages.

The communication application that is executed on the monitored telecommunications device may be a communication application adapted to communicate on the basis of SMS (Short Message Service) or MMS (Multimedia Messaging Service), an e-mail application, an instant messaging (IM) application, a social media application, a gaming application or any other application capable of receiving potentially harmful content.

In the shown example, the telecommunications device 200, which is a child's user equipment, executes an instant messaging (IM) client application 201, which is adapted to communicate with a corresponding IM server application 310 that is executed on IM server 300.

In Fig. 2, telecommunications devices 210, 220 and 230 are shown, which are respectively associated with potential communication peers who may send messages directed to the user of telecommunications device 200, i.e. to the child. It is understood that there is a vast number of potential communication peers and that accordingly devices 210, 220 and 230 are only exemplary. In the shown example, on the telecommunications devices 210, 220 and 230, which may be smartphones, respective IM client applications 211, 221 and 231 are installed and executed, corresponding to the same IM messaging service as the IM client application 202. Accordingly, the client applications 211, 221 and 231 are respectively adapted to communicate with IM server application 310 executed on IM server 300. The devices 210, 220 and 230 being smartphones is only exemplary. It is to be noted that each of the telecommunications devices 200, 210, 220, 230 and 250 may be any kind of device capable of communicating with other devices via a communication network, such as for example a desktop computer, a notebook computer, a tablet computer, a game console, a digital media player, a mobile phone or a wearable computer.

In the shown example, the IM messaging service is adapted to provide chat communication, i.e. the direct exchange of text-, graphic-, audio- or video-based one-to-one or one-to-many chat messages. For the exchange of one-to-many messages typically a communication group, in the following also referred to as chat group, is formed, wherein any message sent by a member of the communication group is received by all other members of the communication group. In the shown example, the IM server application 310 manages a chat group 311, wherein the user of the telecommunications device 200 and at least one of the users of the telecommunications devices 210, 220 or 230 are members of the chat group 311. In order to access chat messages that are exchanged in the chat group 311, the assistant device 100 also becomes a member of the communication group, wherein for this purpose preferably an identifier is assigned to the assistant device 100 for identifying the assistant device 100 within the communication group 311. The identifier may be for example a phone number that is associated with the assistant device 100, wherein the user of the telecommunications device 200 may use this phone number to add the assistant device 100 to a contact list such as a buddy list or friend list, or to invite the assistant device 100 to the communication group. As a member of the chat group 311, the assistant device 100 automatically receives all messages, which are received by the telecommunications device 200 via the chat group 311.

In the example shown in Fig. 2, the assistant device 100 is provided with a chat group interface 151 for accessing chat messages of the chat group 311. Preferably, the chat group interface 151 is provided using an IM client application identical to applications 201, 211, 221 and 231. In other words, the assistant device 100 takes part in the communication of the communication group in the same way as any other member of the communication group. Accordingly, the communication peers of the user of the telecommunication device 200 are aware of the assistant device 100 taking part in the communication. If the identifier used by the assistant device 100, such as its phone number, is known to the communication peers, they accordingly are aware of the communication being monitored.

The assistant device 100 may alternatively access communication messages using an application programing interface (API) that is provided by the provider of the instant messaging service. For this purpose, the assistant device 100 is provided with an API 152, which in the shown example is integrated in the I/O entity 150, and which is adapted to communicate with an API 320 on the IM server 300. If communication messages are accessed by the assistant device 100 via APIs 152 and 320, the communication peers of the user of the telecommunication device 200 preferably are unaware of the assistant device 100 taking part in the communication. It may be advantageous if the communication peers are unaware of the communication being monitored. On the other hand, it may also be advantageous if the communication peers are aware of the communication being monitored, since this may prevent some communication peers to transmit inappropriate content.

Furthermore, the telecommunications device 200 may execute a screen reader application 202. The screen reader application 202 is adapted to capture the screen content of the telecommunications device 200 and to transmit it to the assistant device 100, wherein the assistant device 100 for this purpose is provided with a corresponding screen reader interface 153.

Utilizing a screen reader has the advantage that content received by any communication application executed on the telecommunications device 200 may be accessed, as soon as it is displayed on the screen and thus is perceived by the user.

In a preferred embodiment, the behaviour of the assistant device 100 may be configured by the parents of the user of the telecommunications device 200. In the example shown in Fig. 2, for this purpose a dashboard application is provided, which comprises a dashboard frontend 252 installed on and executed by a telecommunications device of the parents, for example user equipment 250, and a dashboard backend 110 executed by the assistant device 100.

Preferably, the parents may provide parameters for configuring the behaviour of the assistant device 100, which are stored in the data storage entity 160 of the assistant device 100. The provided parameters may for example define one or more communication applications or a type of communication application executable by the telecommunications device, for which received communication messages are to be investigated. Further, the provided parameters may define a type of received content that is to be investigated. If a screen reader application 202 is utilized, the provided parameters may define one or more applications executable by the telecommunications device, which shall be monitored by means of the screen reader application 202. The parameters may also define a validation threshold, wherein content is identified as potentially harmful, if a pre-defined quantifiable feature of the content exceeds the validation threshold. Thereby, the sensitivity of the validation performed by the assistant device 100 may be adjusted.

The assistant device 100 further comprises a learning entity 140, which may be adapted to determine usage patterns and store determined usage patterns in the data storage entity 160. Validation performed by the validation entity 130 may also be based on stored usage patterns. The learning entity 140 may preferably be adapted to adjust the stored parameters and/or usage patterns based on historical communication data and/or based on a machine-learning algorithm and/or based on input provided by the parents, e.g. the user of the telecommunications device 250. The learning entity 140 preferably supports the validation entity 130 in determining potentially harmful content, wherein the parents may provide feedback with respect to the quality of validation results of the validation entity 130. In other words, the parents may provide information with respect to a notification of identified potentially harmful content, whether the content was correctly identified as harmful. That way, supervised machine-learning may with advantage be provided.

The notification and awareness entity 120 of the assistant device 100 in particular generates notifications for the user of the telecommunications device 200 in response to potentially harmful content being identified by the validation entity 130, wherein preferably also notifications for the parents are generated. Notifications may be transmitted by any one of various ways, such as for example SMS, instant messaging or e-mail. Also, the described dashboard application may be used for transmitting notifications, or a notification application that is executed on the telecommunications device 200. It is to be noted that a dashboard frontend may also be installed and executed on the telecommunications device 200, i.e. the child's device, although not shown in Fig. 2, wherein the configuration of the assistant device 100 may also be performed by the child.

The assistant device 100 preferably is adapted to access, investigate and validate other communication messages than the instant messages described above, for example SMS, e-mail or social media messages. For this purpose, the assistant device 100 preferably is provided with suitable interfaces for accessing such messages. In Fig. 2, an exemplary further communication server 400 is shown, executing some other kind of communication application 410, wherein the assistant device 100 in the shown embodiment is adapted to communicate with the communication application 410 via the API 152 and/or via some other suitable interface 154 of the I/O entity 150. Communication via the server 400 may also be used for transmitting notifications. In the example shown in Fig. 2, there is also provided some other communication application 251 on the user equipment 250 of the parents, with which the assistant device 100 can directly communicate via interface 154, in particular in order to transmit notifications.

It is to be noted that each of the described functional components 110, 120, 130, 140, 150 and 160 of the assistant device 100 may comprise hardware and/or software. In particular, components 110 ,120, 130 and 140 may be software components, wherein these software components may preferably be parts of a common software application. Accordingly, the assistant device 100 preferably is a computing device, comprising a micro-processor for executing the software components.

The I/O entity 150 preferably comprises at least one interface for wired or wireless connection to a communication network, such as a cellular network and/or the Internet. The data storage entity 160 preferably comprises at least one non-volatile storage medium, such as for example a hard disk drive.

The assistant device 100 may also be provided as software only with all functional components 110, 120, 130, 140, 150 and 160 being provided as software components, wherein said software components may be individual software applications and/or parts of a common software application. In that variant, the component 150 preferably comprises at least one software interface for communicating with a respective hardware interface, and the component 160 preferably comprises a software interface for communicating with a hardware storage device, wherein the hardware storage device may also be a cloud storage with the software interface of component 160 being adapted to access the cloud storage. It is to be noted that in a further preferred embodiment of the invention, the assistant device 100 may be provided as a cloud application, i.e. as Software as a Service (SaaS).

In the following, preferred embodiments of the functional components or functional blocks of the assistant device 100 are described in more detail.

The dashboard application provides a graphical user interface on the user equipment 250 for the parents using the dashboard frontend 252 and allows the parents to configure the behaviour of the assistant device 100. It further allows parents to provide feedback about validation decisions to the learning entity 140 and visualizes notifications to the parents using the dashboard frontend 252. The dashboard backend 110 receives notifications from the notification and awareness entity 120 and stores settings in the data storage entity 160. The dashboard backend 110 for this purpose has interfaces to the notification and awareness entity120, the dashboard frontend 252, the data storage entity 160 and the learning entity 140.

The input/output entity 150 offers plug-in mechanisms for adapters to interface with various communication applications, wherein the adapters preferably offer two major tasks: receive information (e.g. message content) from communication applications and send notifications to communication applications. An example of an adapter is an adapter that adds the assistant device 100 to a messenger communication, e.g. the chatgroup interface 151. Further exemplary adapters may comprise adapters that provide and/or use an interface such as an API to obtain content, in particular text information, from and potentially send notifications to one of the following: a communication application server, which may be a backend server, an e-mail application or e-mail server, a social media thread or any other kind of communication channel, the screen reader application 202. Exemplary adapters 151, 152, 153 and 154 are shown in Fig. 2.

The validation entity 130 performs a validation of message information, wherein it is in particular adapted to check communication messages for potentially harmful content based on parameters and/or usage patterns stored in the data storage entity 160. It identifies the need for notification, if potentially dangerous and/or child-harming content is identified in the validation and, when required, initiate a respective notification to the child and preferably also to a parent. The validation entity 130 preferably interacts with the learning entity 140, which supports the validation entity 130 in determining potentially harmful content, for example by employing machine-learning algorithms and/or by considering historical communication patterns. The validation entity 130 for this purpose has interfaces to the input/output entity 150, the learning entity 140, the notification and awareness entity 120 and the data storage entity 160. It is noted, however, that access to the data storage entity 160 for the validation entity 130 might be provided via the notification and awareness entity 120 and/or the learning entity 140, in which case an interface to the data storage entity 160 might not be needed for the validation entity 130.

The notification and awareness entity 120 fetches notification preferences from the data storage entity 160 and generates notifications to the child and preferably also to the parents. For delivering notifications to parents and/or the child the notification and awareness entity 120 uses the input/output entity 150 and the dashboard backend 110. The notification and awareness entity 120 accordingly has interfaces to the input/output entity 150, the data storage entity 160 and the dashboard backend 110.

The learning entity 140 preferably supports the validation entity 130 in making decisions by providing historical communication patterns, e.g. providing information on whether a contact is a first time contact or a frequent contact, or on whether a wording is a personal or common wording. The learning entity 140 further receives feedback regarding the quality of validation decisions by the parents, in particular to train a machine-learning algorithm executed by the learning entity 140. The learning entity 140 has interfaces to the validation entity 130, the data storage entity 160 and to the dashboard backend 110.

The data storage entity 160 preferably is used for storing the following data: a configuration data model provided and used by the dashboard backend 110, notification preferences provided to the notification and awareness entity 120, historical communication patterns provided and used by the learning entity 140. The data storage entity 160 has interfaces to the dashboard backend 110, the notification and awareness entity 120, the validation entity 130 and the learning entity 140.

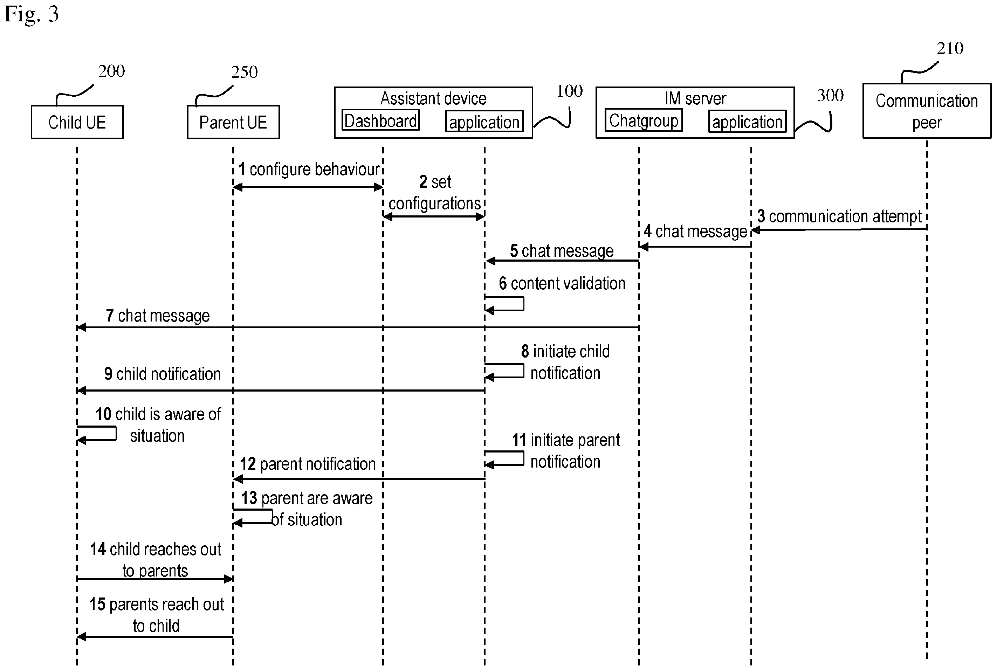

Referring to Fig. 3, a message flow of an exemplary communication between devices involved in a preferred embodiment of the method is schematically shown.

In the exemplary communication shown in Fig. 3, the following devices, which are also shown in Fig. 2, are involved: the child UE 200, the parent UE 250, the IM server 300, the device 210 of a communication peer and the assistant device 100.

In step 1, the behaviour of the assistant device 100 is configured by a parent using for example the telecommunications device 250, wherein in particular input is provided using the above-described dashboard application.

In step 2, depending on the input provided by the parent, the configurations of the assistant device 100 are accordingly set, e.g. in the form of configuration parameters that are stored by the dashboard backend 110 in the data storage entity 160. For example, conditions may be set for generating a notification towards the child and/or the parent, wherein the condition may depend on a level of an identified threat. Further, the level of notification detail may be set, wherein for example notifications towards the parents may be classified, e.g. in form of a traffic light, i.e. green, yellow or red, depending on the identified threat insights, the identified content and/or an identified threat level. Further, a parameter may be set defining whether the respective message content shall be part of a notification to a parent. Still further, parameters may be set defining which meta data, if any, shall be part of a notification, wherein meta data may comprise for example information on date, time, frequency, contact or context, wherein context may provide information on an identified topic such as drugs, weapons or sex. Further, the respective notification medium or mediums to be used may be set. If the assistant device 100 is also used for parental control, respective parental control parameters may also be set in step 2.

In step 3, a communication attempt is performed by a communication peer, wherein in the shown example this is done using an instant messaging application. Accordingly, a communication message is transmitted from the telecommunications device 210 to the IM server 300, wherein the communication message reaches the IM server application executed in the IM server 300.

In step 4 the received communication message is handled internally in the IM server 300, wherein in the shown example it is identified as a chat message and is associated with a chat group. In the shown example, the telecommunications device 200 and the assistant device 100 are members of the chatgroup, as described in detail above. The IM server 300 transmits the chat message to the members of the chat group.

In step 5, since the assistant device 100 is a member of the chatgroup, it receives the chat message, which was sent by the communication peer, from the IM server 300.

In step 6, the assistant device 100 validates the received chat message according to its configuration settings and, if needed, generates a notification for the child and/or a parent.

In step 7, the IM server 300 forwards the chat message to the telecommunications device 200, since the telecommunications device 200 is a member of the chatgroup, wherein this represents the normal communication flow of the IM application.

If the validation performed in step 6 results in the identification of potentially dangerous and/or child-harming content, in step 8, notification of the child is initiated on the basis of the notification generated in step 6.

In step 9, the notification is then transmitted to the telecommunications device 200 of the child, wherein, depending on the configuration of the assistant device 100, one of various communication channels is used to transmit the notification, as for example SMS, e-mail, a messaging application, a notification application, the above-described dashboard application or any other suitable mechanism.

In step 10, the notification is presented to the user of the telecommunications device 200, i.e. the child, so that the child becomes aware of the potentially harmful situation.

If the validation performed in step 6 results in the identification of potentially dangerous and/or child-harming content, and if the assistant device 100 is configured to also notify a parent, then in step 11, notification of a parent is initiated on the basis of the respective notification generated in step 6.

In step 12, the notification is transmitted to the telecommunications device 250 of the parent, wherein, depending on the configuration of the assistant device 100, one of various communication channels is used to transmit the notification, as for example SMS, e-mail, a messaging application, a notification application, the above-described dashboard application or any other suitable mechanism, wherein preferably the notification may comprise an indicator for indicating a threat level, in particular if the dashboard application is used.

In step 13, the notification is presented to the user of the telecommunications device 250, i.e. the parent, so that the parent becomes aware of the potentially harmful situation, wherein a threat level may preferably be indicated by means of a suitable indicator, such as for example a green or red light.

Being informed of the potentially harmful situation, the child in step 14 may reach out to the parents and may ask the parents for help in the current situation. If the parents are also notified, the also the parents are able to reach out to the child to offer help in step 15.

As described above, the assistant device 100 investigates incoming messages and/or content of a child's telecommunications device 200 and for this purpose preferably can take part in respective chat conversations. The assistant device 100 evaluates the messages and/or content regarding potential threats and derives feedback, wherein the feedback is provided to the child and optionally also to the parents.

The invention therefore provides notification to children, which is considered as very important to educate children and to improve their awareness and self-confidence, but it may also provide notification to parents. Furthermore, the inventive solution with advantage enables minimal invasive attachment to existing communication solutions.

It is to be noted that the described steps may be performed in a different order than shown in Fig. 3. Steps 1 and 2 typically are performed for an initial configuration and may be repeated, whenever a change of the configuration shall be applied. Steps 3 to 7 typically are performed for each communication attempt. Steps 8 to 13 are only performed, when potentially harmful content has been identified, wherein steps 11 to 13 are only performed, if the assistant device 100 is configured to also notify a parent. That the child and the parents reach out to each other according to steps 14 and 15, when they have been made aware of a potentially harmful situation, is an advantageous result of the invention.

## Claims

1. A method for assisting a user of a telecommunications device (200) in detecting potentially harmful content, comprising the steps of
a) providing a communication message that is received by a communication application (201) executed on the telecommunications device (200) to an assistant device (100),
b) checking the communication message by the assistant device (100) for potentially harmful content based on stored parameters and/or usage patterns,
c) notifying the user of the telecommunications device (200), if potentially harmful content is identified by the assistant device (100).

2. The method of claim 1, wherein the telecommunications device (200) is a mobile telecommunications device.

3. The method of any one of the preceding claims, wherein the communication message is a message sent by a member of a communication group (311), wherein the user of the telecommunications device (200) and the assistant device (100) are members of the communication group (311), wherein in particular an identifier is assigned to the assistant device (100) for identifying the assistant device (100) within the communication group (311).

4. The method of any one of the preceding claims, wherein the assistant device (100) receives information on the received communication message from the telecommunications device (200), wherein in particular a screen reader application (202) is executed on the telecommunications device (200) and screen content is captured by the screen reader application (202) and transmitted to the assistant device (100).

5. The method of any one of the preceding claims, wherein the assistant device (100) accesses the communication message using an application programing interface (152, 320) provided by the provider of the communication application (201) that is executed on the telecommunications device (200).

6. The method of any one of the preceding claims, wherein a user of a further telecommunications device (250, 260) is notified by the assistant device (100), if potentially harmful content is identified, wherein in particular the user of the telecommunications device (200) is a child and the user of the further telecommunications device (250, 260) is a parent.

7. The method of any one of the preceding claims, wherein a notification message is transmitted from the assistant device (100) to the telecommunications device (200) for notifying the user, in particular to a notification application executed on the telecommunications device (200).

8. An assistant device (100) for assisting a user of a telecommunications device (200) in detecting potentially harmful content, comprising
- a data storage entity (160),
- an input/output entity (150) adapted to access a communication message that is received by a communication application (201) executed on the telecommunications device (200),
- a validation entity (130), adapted to check the communication message for potentially harmful content based on parameters and/or usage patterns stored in the data storage entity (160),
- a notification entity (120), adapted to notify the user of the mobile telecommunications device (200), if potentially harmful content is identified by the validation entity (130).

9. The assistant device of claim 8, wherein
- an identifier is assigned to the assistant device (100), and
- the assistant device (100) and the telecommunication device (200) are members of a common communication group (311), and
- the assistant device (100) is adapted to access all communication messages exchanged in the communication group (311).

10. The assistant device of claim 8 or 9, wherein
- the assistant device (100) is adapted to receive information on received communication messages from the telecommunications device (200), wherein in particular
- the assistant device (100) comprises an interface (153) for communicating with a screen reader application (202) which is executed on the telecommunications device (200), wherein
- the interface (153) is adapted to receive screen content captured by the screen reader application (202).

11. The assistant device of any one of claims 8 to 10, wherein
- the assistant device (100) comprises an application programming interface (152) to access communication messages, wherein in particular
- the application programming interface (152) is provided by the provider of the communication application (201) executed on the telecommunications device (200).

12. The assistant device of any one of claims 8 to 11, wherein the notification entity (120) is adapted to notify a user of a further telecommunications device (250, 260), if potentially harmful content is identified by the validation entity, wherein in particular the user of the telecommunications device (200) is a child and the user of the further telecommunications device (250, 260) is a parent.

13. The assistant device of any one of claims 8 to 12, wherein the assistant device (100) is adapted to transmit a notification message to the telecommunications device (200) for notifying the user, in particular to a notification application executed on the telecommunications device (200).

14. The assistant device of any one of claims 8 to 13, further comprising a learning entity (140), adapted to adjust the stored parameters and/or usage patterns based on historical communication data and/or based on a machine-learning algorithm and/or based on input provided by the user of the further telecommunications device (250, 260).

15. System (50), comprising
- an assistant device (100, 101) according to any one of claims 8 to 14,
- at least one telecommunications device (200), and
- a telecommunications network (500, 510, 520), wherein the assistant device (100, 101) in particular is provided as a hardware server or as a cloud application adapted to communicate with the at least one telecommunications device (200) via the telecommunication network (500, 510, 520).
